# EUROPÄISCHE PATENTSCHRIFT

(11) **EP 1 359 060 B1**
(45) Veröffentlichungstag und Bekanntmachung des Hinweises auf die Patenterteilung: **30.11.2011**
(21) Anmeldenummer: 03008825.6
(22) Anmeldetag: 24.04.2003
(51) Int. Cl.: B60R 21/16

(54) **Gassack für ein Fahrzeuginsassen-Rückhaltesystem**
Airbag for a motor vehicle passenger restraining system
Coussin gonflable pour un système de retenue des occupants d'un véhicule

(30) Priorität: 30.04.2002 DE 20206888 U
(43) Veröffentlichungstag der Anmeldung: 05.11.2003
(73) Patentinhaber: TRW Automotive GmbH, 73553 Alfdorf (DE)
(72) Erfinder: Ritter, Philipp, 73525 Schwäbisch Gmünd (DE)
(74) Vertreter: Prehn, Manfred

(56) Entgegenhaltungen:
- US-A- 5 316 337
- US-A- 5 957 486
- US-A- 6 129 382
- PATENT ABSTRACTS OF JAPAN Bd. 1995, Nr. 08, 29. September 1995 (1995-09-29) & JP 7 125593 A (TOYO TIRE & RUBBER CO LTD), 16. Mai 1995 (1995-05-16)

## Beschreibung

Die Erfindung betrifft einen Gassack für ein Fahrzeuginsassen-Rückhaltesystem, insbesondere zum Zurückhalten eines Beifahrers.

Ein Beifahrer-Gassack hat üblicherweise im entfalteten Zustand eine ausgeprägt dreidimensionale Form, so daß zum einen dem zurückzuhaltenden Beifahrer eine möglichst große Fläche zugewandt ist, die eine Rückhaltewirkung für den Kopf, den Oberkörper und möglichst auch für die Knie bzw. Oberschenkel bietet, und zum anderen eine große Tiefe erreicht wird, die einen großen Rückhalteweg ermöglicht. Eine solche ausgeprägt dreidimensionale Form kann beispielsweise dadurch erhalten werden, daß ein umlaufendes Mantelteil verwendet wird, das sich vom Armaturenbrett nach oben, dann auf der dem Fahrzeuginsassen zugewandten Seite nach vorne und unten und schließlich zurück zum Armaturenbrett erstreckt, und daß seitlich separate Seitenteile angesetzt werden. Um die gewünschte dreidimensionale Form des Gassacks zu erhalten, müssen die Seitenteile nierenförmige zugeschnitten sein. Dies führt zu einem hohen Verschnitt. Außerdem können die Seitenteile mit dem Mantelteil nicht automatisiert vernäht werden, da die Gewebeteile nicht in einem flachen Nähguthalter eingespannt werden können. Somit müssen die Gewebeteile manuell vernäht werden, was zu hohen Herstellungskosten führt.

Die US-A-5,957,486 zeigt einen einstückigen Zuschnitt für einen Gassack, der aus einem Oberteil, einem Frontteil und einem Rückseitenteil besteht. Die einander zugeordneten Hälften des Oberteils und des Frontteils, des Frontteils und des Rückseitenteils sowie des Rückseitenteils und des Oberteils sind kongruent zueinander ausgebildet und einstückig miteinander ausgeführt. Sie werden entlang ihrer außenliegenden Ränder miteinander verbunden. Ein Rand des Rückseitenteils und ein Rand des Oberteils werden nicht miteinander vernäht, um dort eine Einblasöffnung für Druckgas zu bilden.

Die US-A-5,316,337 zeigt einen ähnlichen Zuschnitt für einen Gassack.

Aus der US-A-6,129,382 ist ein aus mehreren Teilen bestehender Gassack bekannt. In einem Wandungsteil ist eine Einblasöffnung für Druckgas vorgesehen.

Die Aufgabe der Erfindung besteht darin, einen Gassack mit ausgeprägt dreidimensionaler Form zu schaffen, dessen Gewebeteile eine solche Form haben, daß sich ein geringer Verschnitt ergibt, und die mittels ebener Nähte vernäht werden, so daß die Gewebeteile automatisiert vernäht werden können.

Zur Lösung dieser Aufgabe ist erfindungsgemäß ein Gassack bestehend aus einem Oberteil, einem Frontteil und einem Rückseitenteil vorgesehen, die jeweils eine allgemein sechseckige Gestalt mit einer ersten Hälfte und einer zweiten Hälfte haben, wobei die erste Hälfte des Oberteils mit der zweiten Hälfte des Rückseitenteils kongruent und mit dieser entlang ihrer drei Außenränder verbunden ist, wobei die erste Hälfte des Rückseitenteils mit der zweiten Hälfte des Frontteils kongruent und mit dieser entlang ihrer drei Außenränder verbunden ist und wobei die erste Hälfte des Frontteils mit der zweiten Hälfte des Oberteils kongruent und mit dieser entlang ihrer drei Außenränder verbunden ist. Der Gassack besteht somit ausschließlich aus sechseckigen Gewebeteilen, die ohne großen Verschnitt aus einer Gewebebahn ausgeschnitten werden können. Da die einzelnen Gewebeteile gerade verlaufende Randabschnitte aufweisen, können sie in einfacher Weise automatisiert miteinander verbunden werden, beispielsweise vernäht oder miteinander verwoben werden.

Es kann im Bereich des Übergangs von der ersten zur zweiten Hälfte beim Oberteil, beim Frontteil und beim Rückseitenteil anstelle einer Ecke jeweils ein Einschnitt vorgesehen ist, so daß mit geringem Aurwand zwei Ausströmöffnungen gebildet sind.

Gemäß einer bevorzugten Ausführungsform der Erfindung ist vorgesehen, daß das Rückseitenteil aus zwei getrennten Teilstücken besteht, die miteinander vernäht sind. Dies erleichtert das Vernähen der verschiedenen Teile des Gassacks.

Vorteilhafte Ausgestaltungen der Erfindung ergeben sich aus den Unteransprüchen.

Die Erfindung wird nachfolgend anhand einer bevorzugten Ausführungsform beschrieben, die in den beigefügten Zeichnungen dargestellt ist. In diesen zeigen:
- Figur 1 einen erfindungsgemäßen Gassack in einer perspektivischen Ansicht;
- Figur 2 das Oberteil des Gassacks von Figur 1 in einer Draufsicht;
- Figur 3 eine Hälfte des Rückseitenteils des Gassacks von Figur 1 in einer Draufsicht;
- Figur 4 die beiden Gewebeteile der Figuren 2 und 3 im miteinander vernähten Zustand in einer Draufsicht;
- Figur 5 die beiden Gewebeteile der Figuren 2 und 3 im miteinander vernähten Zustand in einer Schnittansicht;
- Figur 6 das Frontteil des Gassacks von Figur 1 in einer Draufsicht;
- Figur 7 eine andere Hälfte des Rückseitenteils des Gassacks von Figur 1 in einer Draufsicht;
- Figur 8 die beiden Gewebeteile der Figuren 6 und 7 im miteinander vernähten Zustand in einer Draufsicht;
- Figur 9 die beiden Gewebeteile der Figuren 6 und 7 im miteinander vernähten Zustand in einer Schnittansicht;
- Figur 10 die miteinander vernähten Gewebeteile der Figuren 4 und 8 in einer Draufsicht;
- Figur 11 die Gewebeteile von Figur 10 in einer Schnittansicht;
- Figur 12 den vollständig vernähten Gassack in einer Draufsicht;
- Figur 13 den Gassack von Figur 12 in einer Schnittansicht;
- Figur 14 den vollständig vernähten Gassack in einer weiteren Schnittansicht;
- Figur 15 eine Draufsicht auf eine erste Gewebebahn, aus der Schnittlinien für die Gewebeteile eines erfindungsgemäßen Gassacks ersichtlich sind; und
- Figur 16 eine Draufsicht auf eine zweite Gewebebahn, aus der Schnittlinien für die Gewebeteile eines erfindungsgemäßen Gassacks gemäß einer Weiterbildung ersichtlich sind.

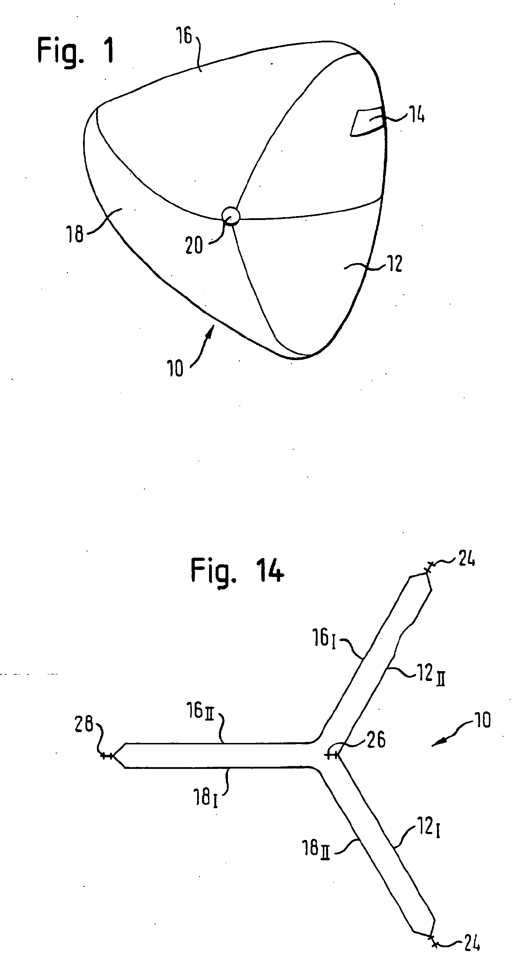

In Figur 1 ist ein dreidimensionaler Gassack 10 gezeigt, der insbesondere für ein Beifahrer-Gassackmodul vorgesehen ist. Der Gassack besteht aus einem Rückseitenteil 12, einem Oberteil 16 und einem Frontteil 18. Im Rückseitenteil 12 ist eine Einblasöffnung 14 vorgesehen, durch die Druckgas in den Gassack eingeleitet werden kann, um ihn zu entfalten. Am Schnittpunkt zwischen dem Rückseitenteil 12, dem Oberteil 16 und dem Frontteil 18 ist eine Ausströmöffnung 20 vorgesehen. Eine weitere Ausströmöffnung ist auf der in Figur 1 nicht sichtbaren Seite des Gassacks 10 vorhanden.

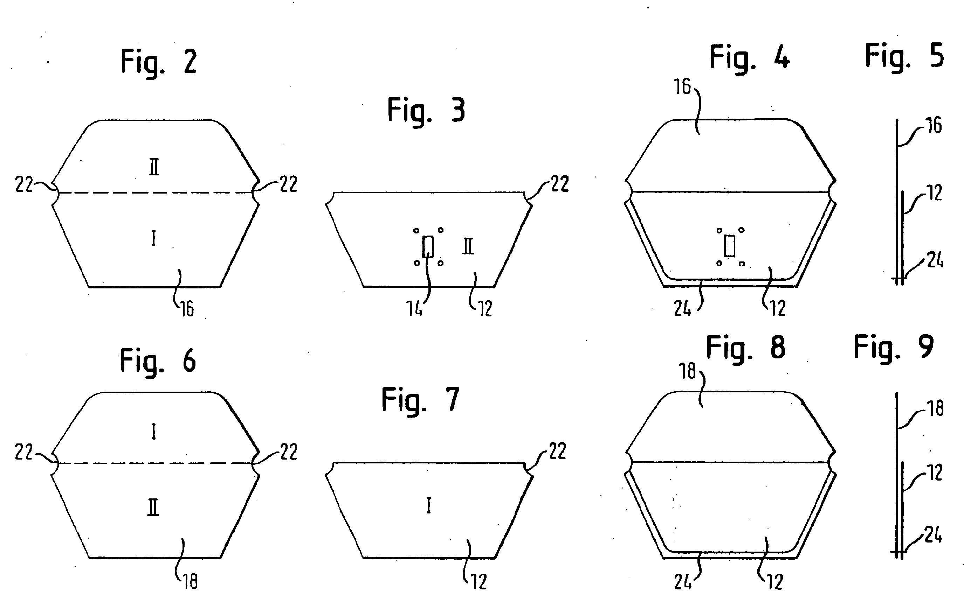

In Figur 2 ist das Oberteil 16 gezeigt, das ein ebenes Gewebeteil mit allgemein sechseckiger Form und geraden Rändern ist. Zur Erleichterung der nachfolgenden Beschreibung wird das Oberteil fiktiv in eine erste Hälfte I und eine zweite Hälfte II unterteilt. Am Übergang zwischen der ersten und der zweiten Hälfte fehlen die eigentlich vorhandenen Ecken, da dort jeweils ein Einschnitt 22 vorgesehen ist. Die übrigen Ecken sind zum Teil abgerundet.

In Figur 3 ist eine Hälfte des Rückseitenteils 12 gezeigt, und zwar die zweite Hälfte. Die erste Hälfte ist in Figur 7 gezeigt. Die beiden Hälften zusammen ergeben ein ebenes, allgemein sechseckiges Gewebeteil, bei dem ähnlich wie beim Oberteil 12 zwei Einschnitte am Übergang zwischen der ersten und der zweiten Hälfte vorgesehen sind. Wichtig ist, daß die zweite Hälfte des Rückseitenteils 12 kongruent mit der ersten Hälfte des Oberteils 16 ist.

In den Figuren 4 und 5 sind das Oberteil 16 und die zweite Hälfte des Rückseitenteils 12 im miteinander vernähten Zustand gezeigt. Es ist eine Naht 24 entlang den drei gemeinsamen Außenrändern der beiden Gewebeteile ausgeführt, so daß ein taschenartiges Zwischenprodukt entsteht. Da die beiden Gewebeteile eben sind und die drei Nahtabschnitte jeweils geradlinig verlaufen, kann die Naht 24 ohne großen Aufwand angebracht werden, insbesondere automatisiert.

In Figur 6 ist das Frontteil 18 gezeigt, das in gleicher Weise wie das Oberteil 16 ein ebenes Gewebeteil mit allgemein sechseckiger Form und geraden Rändern ist. Auch das Frontteil wird fiktiv in eine erste Hälfte I und eine zweite Hälfte II unterteilt, und es sind zwei Einschnitte 22 vorgesehen. Die erste Hälfte des Frontteils 18 ist kongruent mit der zweiten Hälfte des Oberteils 16. Die zweite Hälfte des Frontteils 18 ist kongruent mit der in Figur 7 gezeigte erste Hälfte des Rückseitenteils 12.

In den Figuren 8 und 9 ist zu sehen, daß die erste Hälfte des Rückseitenteils 12 und die zweite Hälfte des Frontteils 18 in gleicher Weise zusammengenäht werden wie die zweite Hälfte des Rückseitenteils 12 mit der ersten Hälfte des Oberteils 16. Auch hier ist ein taschenartiges Zwischenprodukt geschaffen, bei dem sich die Naht 24 in drei Abschnitten entlang den gemeinsamen Rändern der beiden Gewebeteile erstreckt.

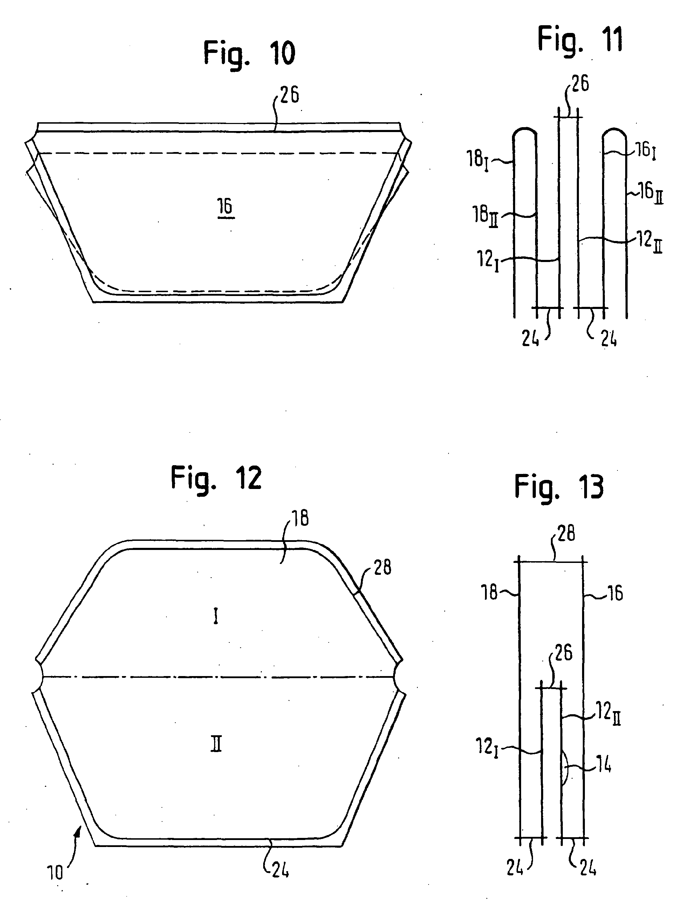

In den Figuren 10 und 11 sind die beiden Zwischenprodukte der Figuren 4 bzw. 5 einerseits und den Figuren 8 bzw. 9 andererseits gezeigt, die miteinander verbunden sind. Zu diesem Zweck werden die beiden Hälften des Rückseitenteils 12 entlang ihrer freien Ränder aufeinandergelegt (in den Figuren 3 und 7 die waagerechten oberen Ränder) und durch eine Naht 26 miteinander vernäht. Dabei können die freien Abschnitte des Oberteils 16 und des Frontteils 18, also die zweite Hälfte des Oberteils 16 und die erste Hälfte des Frontteils 18, nach unten weggeklappt werden, so daß die zu vernähenden Ränder der beiden Hälften des Rückseitenteils 12 frei zugänglich sind.

Alternativ kann das Rückseitenteil 12 auch einstückig ausgeführt werden. Dies spart die Naht 26, erhöht jedoch den Aufwand beim Vernähen des Rückseitenteils 12 mit dem Oberteil 16 und dem Frontteil 18.

In den Figuren 12 und 13 ist der vollständig vernähte Gassack gezeigt. Um ausgehend von dem Zwischenzustand gemäß den Figuren 10 und 11 einen vollständig geschlossenen Gassack zu erhalten, müssen nur noch die zweite Hälfte des Oberteils 16 und die erste Hälfte des Frontteils 18 nach oben geklappt werden, so daß ihre freien Ränder aufeinanderliegen. Diese werden dann durch eine ebene Naht 28 miteinander verbunden, die wiederum drei gerade verlaufende Abschnitte aufweist.

Aufgrund der Einschnitte 22 sind zwei Ausströmöffnungen 20 in den Bereichen des Gassacks gebildet, in denen jeweils drei Gewebeteile aufeinandertreffen. Falls keine Ausströmöffnungen gewünscht sind, können die entsprechenden Ecken der Gewebeteile auch durch die Nähte 24, 26, 28 dicht vernäht werden.

Der beschriebene Gassack kann leicht hergestellt werden, da er ausschließlich aus ebenen Gewebeteilen mit geraden Rändern besteht. Die dreidimensionale Form des Gassacks kann durch die spezifische Form der einzelnen Hälften des Fronteils, des Oberteils und der Rückseitenteils eingestellt werden. Dabei ist nur zu beachten, daß die zweite Hälfte des Oberteils 16 kongruent mit der ersten Hälfte des Frontteils 18 ist, daß die zweite Hälfte des Frontteils 18 kongruent mit der ersten Hälfte des Rückseitenteils 12 ist und daß die zweite Hälfte des Rückseitenteils 12 kongruent mit der ersten Hälfte des Oberteils 16 ist.

In Figur 14 ist der Gassack 10 in einer sternförmigen Gestalt gezeigt. Es ist zu erkennen, daß er auf verschiedene Weisen flach zusammengelegt werden kann. Jeder von zwei unterschiedlichen Hälften zweiter Gewebeteile gebildete Schenkel kann flach auf den benachbarten Schenkel gefaltet werden.

Entsprechend den Anforderungen können für die verschiedenen Gewebeteile unterschiedliche Materialien verwendet werden. Für die in das Innere des Gassacks eingeschlagenen Gewebeteile, also bei der Faltung gemäß Figur 13 für das Rückseitenteil 12, bietet sich ein unbeschichtetes Gewebe an.

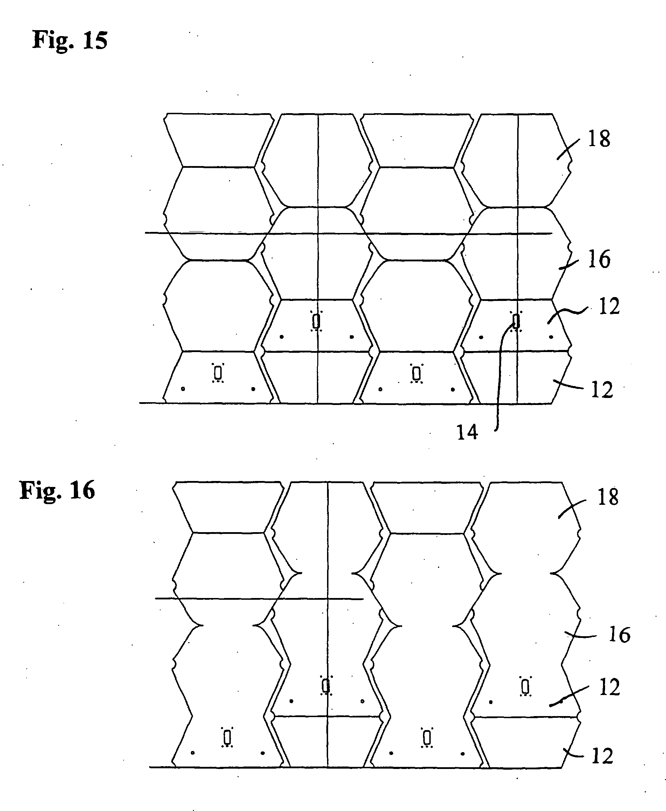

In Figur 15 sind die Schnittlinien gezeigt, entlang denen die Gewebeteile für einen erfindungsgemäßen Gassack aus einer Gewebebahn ausgeschnitten werden können. Es ist ersichtlich, daß sich nur ein sehr geringer Verschnitt ergibt.

In Figur 16 sind die Schnittlinien gezeigt, entlang denen die Gewebeteile für einen erfindungsgemäßen Gassack gemäß einer Weiterbildung aus derselben Gewebebahn ausgeschnitten werden können. Der Unterschied zur Ausführungsform gemäß Figur 15 liegt darin, daß nicht mehr vier einzelne Gewebeteile ausgeschnitten und miteinander vernäht werden müssen, sonder nur noch zwei Gewebeteile. Das Oberteil 16 und das Frontteil 18 sind nämlich einstückig miteinander ausgeführt, und die mit der Einblasöffnung 14 versehene Hälfte 12II des Rückseitenteils schließt sich ebenfalls einstückig an das Oberteil 16 an. Lediglich die zweite Hälfte 12I des Rückseitenteils wird separat ausgeschnitten. Abgesehen vom verringerten Aufwand beim Zuschneiden ergeben sich erhebliche Einsparungen beim Zusammennähen.

## Patentansprüche

1. Gassack (10) bestehend aus einem Oberteil (16), einem Frontteil (18) und einem Rückseitenteil (12), die jeweils eine allgemein sechseckige Gestalt mit einer ersten Hälfte (I) und einer zweiten Hälfte (II) haben, wobei die erste Hälfte des Oberteils (16) mit der zweiten Hälfte des Rückseitenteils (12) kongruent und mit dieser entlang ihrer drei Außenränder verbunden ist, wobei die erste Hälfte des Rückseitenteils (12) mit der zweiten Hälfte des Frontteils (18) kongruent und mit dieser entlang ihrer drei Außenränder verbunden ist und wobei die erste Hälfte des Frontteils (18) mit der zweiten Hälfte des Oberteils (16) kongruent und mit dieser entlang ihrer drei Außenränder verbunden ist.

2. Gassack nach Anspruch 1, **dadurch gekennzeichnet, daß** die Gewebeteile miteinander verwebt sind.

3. Gassack nach Anspruch 1, **dadurch gekennzeichnet, daß** die Gewebeteile durch Nähte (26, 26, 28) miteinander verbunden sind.

4. Gassack nach einem der vorhergehenden Ansprüche, **dadurch gekennzeichnet, daß** im Bereich des Übergangs von der ersten zur zweiten Hälfte beim Oberteil (16), beim Frontteil (18) und beim Rückseitenteil (12) anstelle einer Ecke ein Einschnitt (22) vorgesehen ist, so daß zwei Ausströmöffnungen (20) gebildet sind.

5. Gassack nach einem der vorhergehenden Ansprüche, **dadurch gekennzeichnet, daß** in der zweiten Hälfte des Rückseitenteils (12) eine Öffnung (14) vorgesehen ist, durch die Druckgas in den Gassack (10) eingebracht werden kann oder die zur Aufnahme eines Gassackmoduls dient.

6. Gassack nach einem der vorhergehenden Ansprüche, **dadurch gekennzeichnet, daß** das Rückseitenteil (12) aus zwei getrennten Teilstücken (I, II) besteht, die miteinander vernäht sind.

7. Gassack nach einem der Ansprüche 1 bis 5, **dadurch gekennzeichnet, daß** das Oberteil (16) und das Frontteil (18) einstückig miteinander ausgeführt sind.

8. Gassack nach einem der Asprüche 1 bis 5 und 7, **dadurch gekennzeichnet, daß** ein Teil des Rückseitenteils (12) einstückig mit dem Oberteil ausgeführt ist.

## Claims

1. An airbag (10) comprising an upper part (16), a front part (18) and a rear side part (12), each exhibiting a generally hexagonal configuration having a first half (I) and a second half (II), wherein the first half of the upper part (16) is congruent with the second half of the rear side part (12) and is connected to the latter along its three outer edges, wherein the first half of the rear side part (12) is congruent with the second half of the front part (18) and is connected to the latter along its three outer edges and wherein the first half of the front part (18) is congruent with the second half of the upper part (16) and is connected to the latter along its three outer edges.

2. The airbag according to claim 1, **characterized in that** the fabric parts are interwoven.

3. The airbag according to claim 1, **characterized in that** the fabric parts are interconnected by seams (26, 26, 28).

4. The airbag according to any one of the preceding claims, **characterized in that** in the area of the transition from the first to the second half a notch (22) is provided instead of a corner in the upper part (16), in the front part (18) and in the rear side part (12) so that two discharge orifices (20) are formed.

5. The airbag according to any one of the preceding claims, **characterized in that** in the second half of the rear side part (12) an orifice (14) is provided through which pressurized gas can be introduced into the airbag (10) or which serves for receiving an airbag module.

6. The airbag according to any one of the preceding claims, **characterized in that** the rear side part (12) consists of two separate sections (I, II) which are sewn to each other.

7. The airbag according to any one of the claims 1 to 5, **characterized in that** the upper part (16) and the front part (18) are formed integrally with each other.

8. The airbag according to any one of the claims 1 to 5 and 7, **characterized in that** a part of the rear side part (12) is formed integrally with the upper part.

## Revendications

1. Airbag(10) composé d'une partie supérieure (16), une partie avant (18) et une partie arrière (12), chacune de forme générale hexagonale avec une première moitié (I) et une deuxième moitié (II), où la première moitié de la partie supérieure (16) est congrue et reliée avec la seconde moitié de la partie arrière (12) le long de ses trois bords extérieurs, où la première moitié de la partie arrière (12) est congrue et reliée avec la seconde moitié de la partie avant (18) le long de ses trois bords extérieurs et où la première moitié de la partie avant (18) est congrue et reliée avec la seconde moitié de la partie supérieure (16) le long de ses trois bords extérieurs.

2. Airbag selon la revendication 1, dans lequel les pièces de tissus sont tissées.

3. Airbag selon la revendication 1, dans lequel les pièces de tissus sont reliées grâce à des coutures (26, 27, 28).

4. Airbag selon l'une des revendications précédentes, **caractérisé en ce que** dans la zone de transition de la première à la deuxième moitié de la partie supérieure (16), en partie avant (18) et en partie arrière (12) se trouve une découpe (22) dans l'angle, formant ainsi deux ouvertures de sortie{20).

5. Airbag selon l'une des revendications précédentes, **caractérisé en ce que** se trouve une ouverture (1A) dans la seconde moitié de la partie arrière (12), à travers laquelle le gaz comprimé peut être introduit dans l'airbag (10) ou servant au montage d'un module airbag.

6. Airbag selon l'une des revendications précédentes, **caractérisé en ce que** la partie arrière (12) est réalisée à partir de deux parties distinctes (I, II) cousues ensemble.

7. Airbag selon l'une des revendications 1 à 5, **caractérisé en ce que** la partie supérieure (16) et la partie avant (18) sont réalisées ensemble en une seule pièce.

8. Airbag selon l'une des revendications 1 à 5 et 7, **caractérisé en ce qu'**une partie de la partie arrière (12) est réalisée en une seule pièce avec la partie supérieure.
